# EUROPÄISCHE PATENTANMELDUNG

(11) **EP 3 685 651 A1**
(43) Veröffentlichungstag der Anmeldung: **29.07.2020**
(21) Anmeldenummer: 20152818.9
(22) Anmeldetag: 21.01.2020
(51) Int. Cl.: A01C 7/04, A01C 21/00

(54) **EINZELKORNSÄMASCHINE**

(30) Priorität: 22.01.2019 AT 500482019
(71) Anmelder: Wintersteiger AG, 4910 Ried im Innkreis (AT)
(72) Erfinder: Scherfler, Michael, 4923 Lohnsburg am Kobernaußerwald (AT); Seifriedsberger, Georg, 4922 Geiersberg (AT); Hanslauer, Georg, 4782 Sankt Florian am Inn (AT)
(74) Vertreter: Hübscher & Partner Patentanwälte GmbH

(57) **Zusammenfassung**

Es wird eine Einzelkornsämaschine mit einer einen Saatgutbehälter (11) seitlich abschließenden, auf der vom Saatgutbehälter (11) abgekehrten Seite besaugten Säscheibe (2) aus einem feststehenden Scheibenkörper (3) mit einem entlang einer in einen Fallschacht (15) mündenden Austragsbahn (14) verlaufenden Führungsschlitz (13) und aus einer am Scheibenkörper (3) anliegenden, antreibbaren Förderscheibe (4) mit über den Umfang verteilten, sich über den radialen Erstreckungsbereich des Führungsschlitzes (13) erstreckenden Mitnehmerschlitzen (17) beschrieben, die im Überdeckungsbereich mit dem Führungsschlitz (13) Ansaugöffnungen (18) für die entlang des Führungsschlitzes (13) aus dem Saatgutbehälter (11) austragbaren Saatkörner bilden. Um eine genauere Steuerung zu ermöglichen, wird vorgeschlagen, dass zwischen dem Fallschacht (15) und einer Saatkornkammer (21) eine zwischen einer Offenstellung und einer Ablenkstellung umschaltbare Weiche (22) vorgesehen ist, die in der Offenstellung den Fallweg der Saatkörner durch den Fallschacht (15) freigibt und in der Ablenkstellung die Saatkörner aus dem Fallweg in die Saatkornkammer (21) ablenkt.

## Beschreibung

Die Erfindung bezieht sich auf eine Einzelkornsämaschine mit einer einen Saatgutbehälter seitlich abschließenden, auf der vom Saatgutbehälter abgekehrten Seite besaugten Säscheibe aus einem feststehenden Scheibenkörper mit einem entlang einer in einen Fallschacht mündenden Austragsbahn verlaufenden Führungsschlitz und aus einer am Scheibenkörper anliegenden, antreibbaren Förderscheibe mit über den Umfang verteilten, sich über den radialen Erstreckungsbereich des Führungsschlitzes erstreckenden Mitnehmerschlitzen, die im Überdeckungsbereich mit dem Führungsschlitz Ansaugöffnungen für die entlang des Führungsschlitzes aus dem Saatgutbehälter austragbaren Saatkörner bilden.

Um eine sichere Vereinzelung von Saatkörnern und eine gleichmäßige Austragung der vereinzelten Saatkörner zu erreichen, ist es bei Einzelkornsämaschinen bekannt (DE 31 03 101 C2), die Säscheibe in einen feststehenden Scheibenkörper und eine an diesem Scheibenkörper anliegende Förderscheibe zu unterteilen, die mit radialen Mitnehmerschlitzen versehen ist. Da der Scheibenkörper mit einer sich über einen Umfangsbereich erstreckenden, eine Austragsbahn für die Saatkörner bildenden Führungsschlitz versehen ist, der auf der von der Förderscheibe abgekehrten Seite besaugt wird, ergeben sich im Überdeckungsbereich der Mitnehmerschlitze mit dem Führungsschlitz Ansaugöffnungen für die Saatkörner, die entlang des Führungsschlitzes aus dem an die Säscheibe angeschlossenen Saatgutbehälter ausgetragen werden. Werden die Mitnehmerschlitze aufgrund der Drehung der Förderscheibe über das Ende des Führungsschlitzes hinausbewegt, so fallen die Saatkörner wegen der dann nicht mehr wirksamen Saugkraft von der Förderscheibe in einen Fallschacht ab und gelangen durch ein Särohr auf den Boden, über den die Einzelkornsämaschine bewegt wird. Es ist allerdings schwierig, die örtlichen Enden einer Säreihe innerhalb einer Parzelle festzulegen, wenn es gilt, eine vorgegebene Saatkornanzahl genau in einer Reihe abzulegen, weil es insbesondere am Ende einer Saatgutreihe vorkommen kann, dass ein zusätzliches Saatkorn abgelegt wird.

Der Erfindung liegt somit die Aufgabe zugrunde, eine Einzelkornsämaschine so auszugestalten, dass mit einem vergleichsweise einfachen konstruktiven Aufwand sichergestellt werden kann, dass je Saatgutreihe lediglich die hierfür vorgesehene Anzahl an Saatkörnern abgelegt wird.

Ausgehend von einer Einzelkornsämaschine der eingangs geschilderten Art löst die Erfindung die gestellte Aufgabe dadurch, dass zwischen dem Fallschacht und einer Saatkornkammer eine zwischen einer Offenstellung und einer Ablenkstellung umschaltbare Weiche vorgesehen ist, die in der Offenstellung den Fallweg der Saatkörner durch den Fallschacht freigibt und in der Ablenkstellung die Saatkörner aus dem Fallweg in die Saatkammer ablenkt.

Durch das Vorsehen einer Weiche im Bereich des Fallwegs der Saatkörner durch den Fallschacht kann die genaue Anzahl der durch den Fallschacht auszutragenden Saatkörner sichergestellt werden, weil der Fallschacht nur für die vorgegebene Anzahl an Saatkörnern freigegeben wird. In der den Fallschacht sperrenden Ablenkstellung der Weiche werden ja die allenfalls überzähligen Saatkörner in eine Saatkornkammer umgeleitet. Die Anzahl der von der Förderscheibe aus dem Saatgutbehälter ausgetragenen Saatkörner wird durch den gegenseitigen Winkelabstand der Mitnehmerschlitze und den Drehwinkeln der Förderscheibe bestimmt, sodass diese Parameter der Steuerung der Weiche zugrunde gelegt werden können.

Da es lediglich darum geht, ein Abfallen überschüssiger Saatkörnern in den Fallschacht zu unterbinden, kann die hierfür vorgesehene Weiche unterschiedlich ausgeführt sein. Besonders einfache Konstruktionsbedingungen ergeben sich allerdings, wenn die Weiche eine Ablenkklappe umfasst, die lediglich zwischen der Offenstellung und der Ablenkstellung verschwenkt werden muss, wofür einfache Stelltriebe zur Verfügung stehen, beispielsweise Schwenkzylinder. Die in der Ablenkstellung der Weiche aus dem Fallweg durch den Fallschacht abgelenkten Saatkörner werden in einer Saatkornkammer aufgefangen, um entweder in den Saatgutbehälter rückgeführt oder gesondert ausgetragen zu werden. Die Ablenkung der Saatkörner aus dem Fallweg durch den Fallschacht in die Saatkornkammer lässt sich platzsparend durchführen, wenn die Ablencklappe Teil einer Trennwand zwischen dem Fallschacht und der Saatkornkammer ist. In der Ablenkstellung der Ablenkklappe wird nämlich der Fallschacht gesperrt und zugleich die Saatkornkammer geöffnet, während in der Offenstellung der Fallschacht freigegeben und die Saatkorntkammer gegenüber dem Fallschacht abgesperrt wird.

In der Zeichnung ist der Erfindungsgegenstand beispielsweise dargestellt. Es zeigen
- Fig. 1: eine erfindungsgemäße Einzelkornsämaschine ausschnittweise in einem achsnormalen Schnitt nach der Linie I-I der Fig. 2 und
- Fig. 2: einen Schnitt nach der Linie II-II der Fig. 1 in einem kleineren Maßstab.

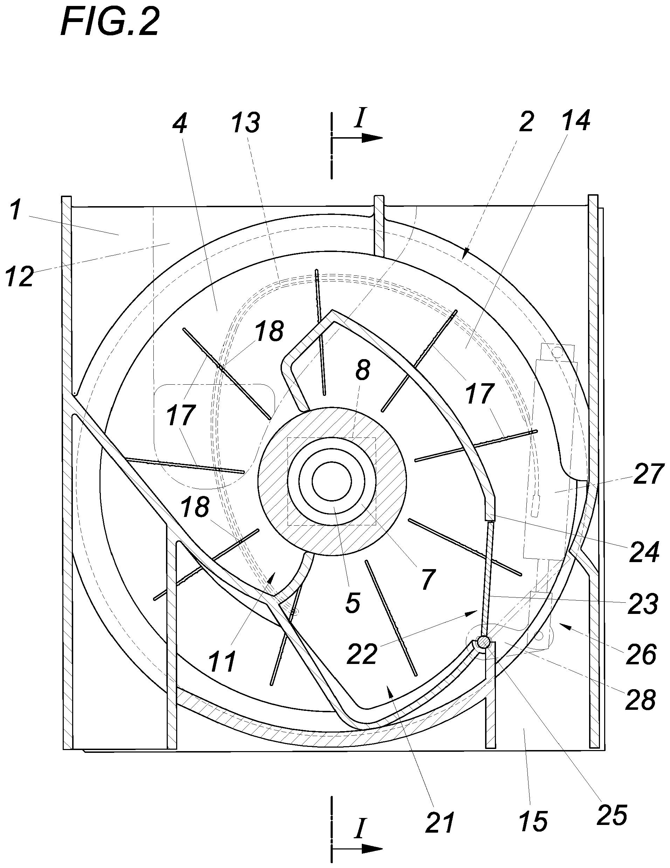

Die Einzelkornsämaschine gemäß dem dargestellten Ausführungsbeispiel weist eine in einem Gestell 1 gelagerte Säscheibe 2 auf, die aus einem Scheibenkörper 3 und einer an diesem Scheibenkörper 3 anliegenden Förderscheibe 4 zusammengesetzt ist. Während der Scheibenkörper 3 drehfest im Gestell 2 gehalten wird, ist die Förderscheibe 4 auf einer Antriebswelle 5 angeordnet, die das Gestell 2 durchsetzt und in Wälzlagern 6 gelagert ist. Zur Mitnahme der Förderscheibe 4 durch eine auf der Antriebswelle 5 sitzenden Mutter 7 weist die Mutter 7 einen quadratischen Querschnitt auf und greift in eine entsprechende Aufnahmeöffnung 8 der Förderscheibe 4 ein, wie dies in der Fig. 2 angedeutet ist. Zum Antrieb der Förderscheibe 4 trägt die Antriebswelle 5 auf ihrem der Säscheibe 2 abgekehrten Ende ein Zahnrad 9 für einen Zahnriemen 10.

Die Säscheibe 2 schließt einen Saatgutbehälter 11 seitlich ab, der durch einen Zulaufkanal 12 mit dem jeweiligen Saatgut beschickt werden kann. Die Saatkörner legen sich dabei aufgrund der Neigung der Wände des Saatgutbehälters 11 an die Säscheibe 2 an.

Der Scheibenkörper 3 der Säscheibe 2 bildet einen Führungsschlitz 13, der entsprechend der Fig. 2 vom Bodenbereich des Saatgutbehälters 11 ausgeht und entlang einer Austragsbahn 14 verläuft, die sich im Drehsinn der Förderscheibe 4 über einen Umfangsbereich von mehr als 180° erstreckt und in einen Fallschacht 15 mündet. Da das Gestell 2 eine durch den Scheibenkörper 3 der Säscheibe 2 abgedeckte, sich entlang des Führungsschlitzes 13 erstreckende Saugkammer 16 bildet, kann der Führungsschlitz 13 entlang der Austragsbahn 14 durchgehend besaugt werden

Die Förderscheibe 4 der Säscheibe 2 ist mit gleichmäßig über den Umfang verteilten, im Wesentlichen radial verlaufenden Mitnehmerschlitzen 17 versehen, die sich über den radialen Erstreckungsbereich des Führungsschlitzes 13 erstrecken und im Überdeckungsbereich mit dem Führungsschlitz 13 Ansaugöffnungen 18 bilden, an die die Saatkörner einzeln angesaugt und dann aufgrund der Drehung der Förderscheibe 4 entlang des Führungsschlitzes 13 nach oben aus dem Saatgutbehälter 11 ausgetragen und im Bereich des abwärts gerichteten Austragsendes des Führungsschlitzes 13 in den Fallschacht 15 abgeworfen werden.

Aufgrund der Besaugung der Säscheibe 2 über die Saugkammer 16 wird die Förderscheibe 4 axial an den Scheibenkörper 3 angesaugt. Um die Förderscheibe 4 auch ohne Besaugung der Säscheibe 2 in ihrer axialen Lage zu sichern, ist der Saatgutbehälter 11 mit einem hülsenartigen Anschlag 19 versehen, der frei drehbar auf einer Achse 20 des Saatgutbehälters 11 gelagert ist und die axiale Lage der Förderscheibe auf der Mutter 7 sichert.

Wie der Fig. 2 entnommen werden kann, ist dem Fallschacht 15 eine Saatkornkammer 21 zugeordnet, zwischen der und dem Fallschacht 15 eine Weiche 22 für die Saatkörner vorgesehen ist. Diese Weiche 22 umfasst gemäß dem dargestellten Ausführungsbeispiel eine Ablenkklappe 23, die Teil einer Trennwand 24 zwischen dem Fallschacht 15 und der Saatkornkammer 21 ist. Die Ablencklappe 23 ist auf einer Welle 25 gelagert, die mit einem Schwenktrieb 26 verbunden ist. Als Schwenktrieb 26 kann ein Schwenkzylinder 27 vorgesehen sein, der an einem Schwenkarm 28 der Welle 25 angreift.

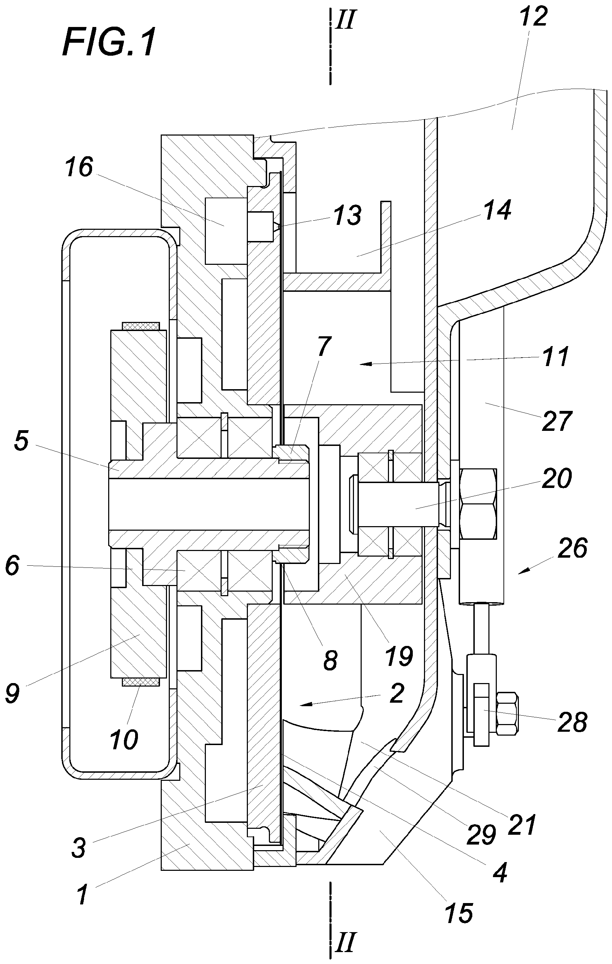

Mithilfe des Schwenktriebs 26 kann die Ablenkklappe 23 zwischen einer in Fig. 2 in vollen Linien gezeichneten Offenstellung, in der der Fallweg der Saatkörner durch den Fallschacht 15 unter einer gleichzeitigen Absperrung der Saatkornkammer 21 freigegeben wird, und einer strichpunktiert angedeuteten Ablenkstellung verlagert werden, in der der Fallschacht 15 gesperrt und der Zugang zur Saatkornkammer 21 geöffnet wird, sodass die Saatkörner durch die Ablencklappe 23 vom Fallweg durch den Fallschacht 15 abgelenkt und in die Saatkornkammer 21 abgelenkt werden. Die Saatkornkammer 21 kann im Bedarfsfall durch eine in Fig. 1 eingezeichnete Austragsöffnung 29 entleert werden, die in einen aus Übersichtlichkeitsgründen nicht dargestellten Austragskanal mündet.

Zufolge der Anordnung einer Weiche 22 wird es in einfacher Art möglich, eine genaue Anzahl der durch den Fallschacht 15 auszutragenden Saatkörner zu gewährleisten. Hierfür ist ja lediglich der Fallschacht 15 durch die Weiche 22 für einen die Anzahl der auszutragenden Saatkörner bestimmenden Drehwinkel der Förderscheibe 4 der Säscheibe 2 freizugeben.

## Patentansprüche

1. Einzelkornsämaschine mit einer einen Saatgutbehälter (11) seitlich abschließenden, auf der vom Saatgutbehälter (11) abgekehrten Seite besaugten Säscheibe (2) aus einem feststehenden Scheibenkörper (3) mit einem entlang einer in einen Fallschacht (15) mündenden Austragsbahn (14) verlaufenden Führungsschlitz (13) und aus einer am Scheibenkörper (3) anliegenden, antreibbaren Förderscheibe (4) mit über den Umfang verteilten, sich über den radialen Erstreckungsbereich des Führungsschlitzes (13) erstreckenden Mitnehmerschlitzen (17), die im Überdeckungsbereich mit dem Führungsschlitz (13) Ansaugöffnungen (18) für die entlang des Führungsschlitzes (13) aus dem Saatgutbehälter (11) austragbaren Saatkörner bilden, **dadurch gekennzeichnet, dass** zwischen dem Fallschacht (15) und einer Saatkornkammer (21) eine zwischen einer Offenstellung und einer Ablenkstellung umschaltbare Weiche (22) vorgesehen ist, die in der Offenstellung den Fallweg der Saatkörner durch den Fallschacht (15) freigibt und in der Ablenkstellung die Saatkörner aus dem Fallweg in die Saatkornkammer (21) ablenkt.

2. Einzelkornsämaschine nach Anspruch 1, **dadurch gekennzeichnet, dass** die Weiche (22) eine Ablenkklappe (23) umfasst.

3. Einzelkornsämaschine nach Anspruch 2, **dadurch gekennzeichnet, dass** die Ablenkklappe (23) Teil einer Trennwand (24) zwischen dem Fallschacht (15) und der Saatkornkammer (21) ist.
